# FASCICULE DE BREVET EUROPEEN

(11) **EP 3 370 370 B1**
(45) Date de publication et mention de la délivrance du brevet: **09.12.2020**
(21) Numéro de dépôt: 18162717.5
(22) Date de dépôt: 18.04.2008
(51) Int. Cl.: H04L 12/24, H04B 3/54, G01D 5/20, G06F 3/02, G06F 3/023, H04L 9/32, H04L 12/28, H04L 29/12

(54) **PROCÉDÉ DE COMMUNICATION POUR DES ÉLÉMENTS CONSTITUTIFS D'UN RÉSEAU DE DISTRIBUTION D'ÉNERGIE ÉLECTRIQUE ET DES DISPOSITIFS DE MISE EN OEUVRE DU PROCÉDÉ**
KOMMUNIKATIONSVERFAHREN FÜR DIE BESTANDTEILE EINES STROMVERSORGUNGSNETZES UND VORRICHTUNGEN ZUR UMSETZUNG DIESES VERFAHRENS
COMMUNICATION METHOD FOR ELEMENTS THAT FORM AN ELECTRICITY DISTRIBUTION NETWORK AND DEVICES FOR IMPLEMENTING THE METHOD

(43) Date de publication de la demande: 05.09.2018
(62) Demande divisionnaire de: 08368011.6
(73) Titulaire: Schuffenecker, Thierry, 06800 Cagnes sur Mer (FR)
(72) Inventeur: SCHUFFENECKER, Thierry, F06800 Cagnes sur Mer (FR); KOGLER, Roland, 06140 VENCE (FR)

(56) Documents cités:
- EP-A- 1 128 604
- EP-A- 1 521 401
- WO-A-2006/047185
- DE-A1- 10 244 958
- DE-A1-102004 025 056
- US-A1- 2003 078 990
- US-A1- 2005 180 561

## Description

### Domaine technique de l'invention

La présente invention concerne les réseaux d'alimentation en énergie électrique domestique et/ou industrielle et plus spécifiquement un procédé de communication pour des éléments constitutifs d'un réseau de distribution d'énergie électrique et des dispositifs de mise en œuvre du procédé.

### Etat de la technique

Avec le développement de la « domotique », l'on recherche depuis de nombreuses années à accroître l'intelligence des dispositifs électriques notamment à usage domestique. A cet égard, on à cherché à utiliser notamment les fonctionnalités du réseau Internet pour rendre plus intelligents les dispositifs électriques susceptibles d'être connectés au réseau d'alimentation électrique.

C'est ainsi que le brevet EP1217475 décrit ainsi un dispositif et un procédé de commande à distance d'appareils ménagers basé sur l'intégration d'un serveur web intégré dans ledit appareil ménager et la connexion de ce serveur à un fournisseur d'accès Internet (ISP). Mais ce brevet ne vise nullement à intégrer la communication au sein même du réseau de distribution d'énergie électrique et notamment de ses divers composants constitutifs.

Le brevet EP1349340 décrit également une méthode pour contrôler un réseau d'appareils domestiques comportant une unité de partage IP affectant des adresses IP privées ou des numéros de port respectivement à un grand nombre d'appareils domestiques connectés au réseau d'alimentation électrique. A nouveau, le réseau de distribution d'énergie électrique et ses éléments constitutifs tels que les disjoncteurs, les interrupteurs, les prises électriques etc... restent complètement à l'écart des protocoles de communication.

Les deux exemples qui viennent d'être cités sont deux exemples illustratifs de cette recherche visant à rendre « communiquant » les appareils domestiques connectés au réseau électrique, notamment via le réseau INTERNET.

Ces exemples qui viennent d'être cités laissent complètement de côté le réseau de distribution électrique et les composants constitutifs de ce réseau.

D'autres recherches ont conduit à introduire des possibilités de communication au sein du réseau de distribution d'énergie électrique mais au prix d'installation complexes, coûteuses et complètement « propriétaires » c'est à dire contraignant l'usager à s'approvisionner chez un seul et même fournisseur.

Un premier système du type évoqué précédemment est le système IN-ONE BY LEGRAND (Marque déposée) mis sur le marché par la société LEGRAND. Ce système permet l'intégration d'un module de commande de « scénarios » d'allumage ou d'extinction de points lumineux. Ce système est basé sur l'utilisation d'interrupteurs commandables à distance par courants porteurs ou par onde radios.... En pratique, on utilise un interrupteur spécifique commandable manuellement ou par courant porteur ou, alternativement, on dispose derrière un interrupteur classique un microboitier permettant de réaliser un circuit de commutation manuel (via l'interrupteur disposé devant le boîtier) ou par courant porteur. Ce système, s'il apporte déjà une nette amélioration à ce besoin de flexibilité dans la commande à distance ne permet pas d'aboutir à une solution complète et complètement programmable des différents modules du tableau électrique.

Une autre solution connue est commercialisée par la société HAGER sous la marque TéBIS... Cette solution est basée sur un ensemble d'interrupteurs communicants et de modules de sortie bus pour variation d'éclairage permettant de réaliser une gestion de l'éclairage ou de la distribution électrique. La communication entre ces éléments se fait par ondes radio ou par un bus spécifique comportant une paire croisée sur laquelle communique un protocole désigné par KNX. Un procédé d'association par télécommande permet de faciliter l'association des interrupteur de commande et les modèles de sortie de l'éclairage.
La solution connue TéBIS prévoit la communication des interrupteurs via un réseau INTRANET ou le réseau INTERNET au moyen d'un boîtier spécifique qui est une passerelle permettant un accès à un LAN préexistant...

Ces installations dites « communicantes » n'intègrent nullement, comme on le voit, le protocole IP au sein même du réseau de distribution d'énergie électrique. Dans le système Tébis de la société HAGER, seule la passerelle dispose de sa propre adresse IP qui, d'ailleurs, lui est fournie par un routeur externe qui est donc nécessaire. En aucun cas, ce système ne permet une distribution automatique d'adresse IP au sein même du réseau électrique de distribution d'énergie et, a fortiori, la mise en œuvre d'un serveur DHCP au cœur de ce réseau.

En outre, ces systèmes imposent des modifications substantielles au niveau du tableau électrique de l'usager puisque, d'une part, de nouveaux conducteurs doivent être aménagés (les cables du bus spécifique) et de nouveaux modules (notamment ladite passerelle) doit trouver son logegment au sein du tableau.

Le brevet US6,005,759 décrit l'organisation d'un réseau dit DNP ou *Distributed Network Protocol* au sein d'un réseau de distribution de puissance électrique comportant un ensemble de sous stations comportant chacune un réseau LAN (Local Area Network). Une fois encore, ce brevet ne décrit nullement l'organisation d'une architecture basée sur le protocole IP directement au sein d'un réseau de distribution électrique pour une installation « domestique ».

Le brevet WO03058481 poursuit plus avant la réalisation d'un réseau de type DNP permettant la communication d'informations concernant des dispositifs locaux de distribution de puissance et intègre la mise en place d'un serveur de type WEB dans un tel réseau. Mais là également, les dispositifs constitutifs du réseau de distribution électrique de puissance ne communiquent nullement par l'intermédiaire du protocole IP. En outre, ces réalisations ne concernent nullement l'installation d'un réseau domestique chez l'abonné.

Le brevet EP1062648 décrit la réalisation d'un accès à distance à des compteurs électriques en utilisant la suite TCP/IP. Cette réalisation ne décrit ni ne suggère l'intégration du protocole TCP/IP directement au sein du réseau domestique de distribution d'énergie et notamment dans les différents composants ou modules (disjoncteurs, prises, DCL ...). Dans le brevet EP1062648, on note en particulier que les compteurs communiquent via un réseau local à bus désigné CEBUS

EP1128604 décrit un dispositif permettant l'adaptation à un processeur déployable dans le domaine de la construction de systèmes de gestion de commande, de régulation , de surveillance et / ou des applications de reporting. L'équipement comprend une interface pour le raccordement à un équipement ou une application, avec d'autres interfaces, la connexion à un réseau de communication, illustré par la BEI (bus d'installation Euro) LON, BACnet, un système de convergence ou de KNX.

DE102004025056 décrit un procédé et un dispositif de restriction d'accès à un réseau avec supports partagés par plusieurs participants. Le procédé implique l'assemblage d'une structure de réseau logique par attribution d'adresses IP aux abonnés et le suivi de transmission de données dans le réseau, par exemple le système de ligne d'alimentation des ménages. La surveillance consiste à détecter les adresses IP pour identifier les abonnés d'un réseau IP diffèrent qui sont par la suite exclus.

US2005/0180561 décrit un procédé et un dispositif permettant l'évolution d'un connecteur de service existant (e.g. LAN, téléphonique, prise électrique ou prise TV) au sein d'une habitation par l'ajout d'une fonctionnalité adéquate. La fonctionnalité est apportée par l'ajout d'un module juxtaposé, connecté électriquement et fixé mécaniquement au connecteur existant. Différents modes de fixation sont décrites.

Les solutions qui viennent d'être exposées brièvement constituent, comme on le voit, des démarches intéressantes pour réaliser une installation domotique performante chez l'abonné. Néanmoins, ces solutions restent complexes et couteuses à mettre en œuvre comme on l'a vu et, en outre, rendent l'usager complètement dépendant d'une architecture « propriétaire », ce qui s'avère être un grave inconvénient lorsqu'il s'agit de réaliser - et d'en assurer la maintenance - une installation durable dans une maison et facile à maintenir.

L'invention a pour objet de pallier à ces inconvénients.

### Résumé de l'invention

La présente invention a pour but de permettre l'intégration complète du protocole TCP/IP directement au sein d'un réseau de distribution d'énergie domestique ou industrielle et des éléments constitutifs de ce réseau, tels que les disjoncteurs, prises électriques et dispositifs de connexion terminale.

La présente invention a également pour but un procédé de communication entre les éléments constitutifs d'un réseau d'alimentation en énergie électrique pour une installation domestique ou industrielle, qui améliore de manière significative la flexibilité et les fonctionnalités du réseau ainsi que ses possibilités d'extension futures.

Un autre but de la présente invention consiste à proposer un dispositif ou module électrique destiné à un tableau électrique d'abonné assurant conjointement les fonctions de disjoncteur électrique et de routeur conforme au protocole IP pour un réseau de distribution d'énergie électrique communicant.

C'est un autre but de la présente invention que de fournir un interrupteur communiquant destiné à être intégré dans le réseau communiquant, recevant sa propre adresse IP et communiquant avec les autres éléments constitutifs du réseau de distribution d'énergie électrique, tels que notamment les disjoncteurs, prises électriques et dispositifs de connexion terminale.

C'est un troisième but de la présente invention que de réaliser un dispositif de prise électrique, par exemple de type normalisée 2P + T, recevant sa propre adresse IP et communiquant avec les autres éléments constitutifs du réseau de distribution d'énergie électrique, tels que notamment les disjoncteurs, les interrupteurs et les dispositifs de connexion terminale.

C'est un quatrième but de la présente invention que de réaliser un dispositif de connexion terminale recevant sa propre adresse IP et communiquant avec les autres éléments constitutifs du réseau de distribution d'énergie électrique, tels que notamment les disjoncteurs, prises électriques et dispositifs de connexion terminale.

L'invention réalise ces buts au moyen d'un procédé de communication entre deux éléments constitutifs d'un réseau de distribution d'énergie électrique d'une installation domestique ou industrielle monophasé ou triphasé comportant des disjoncteurs, modules électriques, interrupteurs, prises électriques et dispositifs de connexion terminale, le procédé comportant les étapes suivantes :
- l'assignation d'une première adresse IP à un premier élément constitutif du réseau de distribution, dans lequel ledit premier élément est un interrupteur mural comportant un premier circuit électronique comprenant des premiers circuits mémoires configurés pour le stockage de ladite première adresse IP assignée lors d'une phase de configuration ;
- l'assignation d'une seconde adresse IP à un second élément constitutif du réseau de distribution en énergie électrique, dans lequel ledit second élément est une prise murale 2P+T ou un Dispositif de Connexion Lumineuse DCL comportant un second circuit électronique comprenant des seconds circuits mémoire configurés pour le stockage de ladite seconde adresse IP utilisée lors de ladite phase de configuration,
dans lequel la phase de configuration comporte l'utilisation de l'adresse MAC de l'interrupteur et de l'adresse MAC de la prise murale 2P+T ou dudit Dispositif de Connexion Lumineuse DLC pour permettre l'assignation d'une adresse IP;
- l'établissement d'une communication entre lesdits premier et second éléments du réseau de distribution d'énergie électrique, dans laquelle lesdites première et seconde adresses IP sont échangées dans le but de créer une association entre lesdits premier et second éléments permettant la commande de ladite prise murale 2P+T ou dudit dispositif DCL par ledit interrupteur mural grâce à l'échange de paquets IP, dans lequel la transmission entre ledit interrupteur et ladite prise 2P+T ou ledit dispositif de connexion Lumineuse DCL est effectuée au moyen d'une communication radio-fréquence.

Grâce à l'assignation de leur propre adresse IP, les deux éléments constitutifs du réseau de distribution d'énergie électrique deviennent parfaitement communicants et il en résulte de multiples possibilités et fonctionnalités supplémentaires.

Dans un mode de réalisation particulier, les adresses IP peuvent être assignées manuellement ou via un protocole tel que DHCP, BootP ou RARP sur la base des adresses MAC stockées dans les premiers et seconds circuits mémoires, respectivement.

Dans un mode de réalisation particulier, l'assignation d'adresse est réalisé au moyen d'un serveur DHCP localisé au sein d'un disjoncteur.

Dans un mode de réalisation particulier, l'échange de paquets est assuré par au moins un disjoncteur intégrant la fonction de routeur assurant les échanges de paquets entre deux sous-réseaux.

En pratique, il sera très facile à implémenter l'invention dans une installation existante puisqu'il suffit de remplacer deux éléments constitutifs ou plus d'une installation existante pour assurer leur communication et, par conséquent, permettre le bénéfice des nouvelles fonctionnalités qui seront décrites ci-après.

Dans un mode de réalisation particulier, la communication entre ledit premier élément et ledit second élément est effectué par courant porteur de type CPL (Courant Porteur en Ligne), ce qui sera toujours possible dès lors que deux conducteurs de phase et neutre seront disponibles. Alternativement, dans un second mode de réalisation la communication entre ledit premier élément et ledit second élément est effectué par ondes radio.

Dans un mode de réalisation particulier, ledit premier élément constitutif est un interrupteur et ledit second élément constitutif est une prise électrique, murale par exemple de type 2P+T, ou encore une douille destinée à permettre le branchement d'une ampoule électrique.

Dans un mode de réalisation particulier, le procédé comporte en outre une étape de communication avec un disjoncteur, différentiel ou non, doté de moyens de communication IP et recevant sa propre adresse IP.

Ainsi, grâce à l'invention, ce sont des commandes IP qui sont directement véhiculées au sein du réseau, soit par CPL soit par ondes radios, et qui sont échangés par les composants du réseau de distribution électriques qui sont en même temps des serveurs ou client IP.

Il en résulte que le réseau électrique d'une installation domestique peut tirer profit de la richesse du protocole IP et, en outre ce qui n'est pas un moindre avantage, devenir complètement indépendant des fournisseurs de matériels électriques.

Avec le procédé de l'invention, on pourra même commander conjointement, au moyen d'un unique interrupteur, un ensemble de fonctionnalités distinctes (chauffages, luminaires spécifiques etc...) pour obtenir un véritable « scénario » d'allumage et d'extinction facile à réaliser.

Par ailleurs, indépendamment, de la possibilité de commander l'allumage-l'extinction de luminaires et/ou chauffage, l'invention permet la possibilité de communication entre deux éléments quelconque du réseau, autorisant dès lors une grande variété de nouvelles fonctionnalités.

Par exemple, un disjoncteur communicant peut à présent communiquer avec des dispositifs de connexion ou les appareils connectés sur son propre circuit, autorisant ainsi des calculs d'ordre statistique sur la consommation, ou le report de conditions de fonctionnement ou de situations d'erreurs.

Les éléments communicants disposant en outre de leur propre adresse IP deviennent ailleurs parfaitement accessibles depuis un réseau Intranet ou depuis le réseau Internet et deviennent commandables à distance.

L'invention permet ainsi la réalisation d'interrupteurs, de prises 2P+T par exemple et des dispositifs de connexion lumineuse DLC pour la mise en œuvre du procédé.

En particulier, l'invention réalise un **interrupteur** comportant :
- des moyens de connexion au réseau électrique;
- des moyens permettant de stocker une adresse IP attribué par un serveur DHCP, par exemple ;
- des moyens pour générer des paquets IP dans le but d'établir une communication.

De la même manière, l'invention réalise une **prise** , par exemple à encastrer dans un support mural, comportant :
- un bornier permettant la connexion au réseau électrique ;
- un connecteur permettant le branchement d'une fiche ;
- des moyens permettant de stocker une adresse IP ;
- des moyens pour générer des paquets IP dans le but d'établir une communication avec d'autres éléments.

La communication par paquet IP ou datagramme IP peut permettre la commande de la prise 2P+T qui devient alors une prise commandée.

L'invention permet également la réalisation d'un **dispositif de connexion lumineuse** comportant :
- un bornier permettant la connexion au réseau électrique ;
- un connecteur permettant le branchement d'un luminaire ;
- des moyens permettant de stocker une adresse IP ;
- des moyens pour générer des paquets IP dans le but d'établir une communication avec d'autres éléments.

La communication par paquet IP ou datagramme IP peut permettre la commande du dispositif de connexion lumineuse qui devient ainsi commandable à distance.

L'invention permet également la réalisation d'une **douille électrique** comportant :
- un culot permettant le branchement d'une ampoule électrique, ledit culot recevant deux conducteurs respectivement phase et neutre,
- un dispositif de commutation commandable permettant de couper le courant destiné à l'alimentation de ladite ampoule,
- un dispositif de commande alimenté par les deux conducteurs phase et neutre et comportant des moyens de communication IP permettant l'échanges de messages destiné à la commande ou non de l'ampoule électrique branchée sur la douille.

L'invention réalise également un **disjoncteur** pour tableau électrique comportant :
- un bornier d'entrée permettant la connexion d'au moins deux conducteurs, par exemple un conducteur PHASE et un conducteur NEUTRE ;
- un bornier de sortie protégé comportant au moins deux conducteurs ;
- des moyens de communication permettant le stockage d'une adresse IP et l'échange de paquets IP au travers le réseau électrique avec d'autres modules dudit réseau.

Le disjoncteur devient ainsi communicant via le protocole IP , ouvrant ainsi la voie à de multiples possibilités et fonctionnalités nouvelles.

Dans un mode de réalisation particulier, le disjoncteur comporte un serveur DHCP, BootP ou RARP, éventuellement débrayable, permettant d'assigner suivant un protocole tel que DHCP (*Dynamic Hoste Control Process*) par exemple des adresses IP (IPV4 ou IPV6 par exemple) aux différents éléments constitutifs du réseau.

Dans un mode de réalisation, le disjoncteur intègre un routeur doté de moyens de stockage des tables de routage, afin d'assurer le routage des paquets IP généré depuis et acheminé vers les éléments communication appartenant à un sous-réseau LAN.

Dans un mode de réalisation particulier, le disjoncteur comporte des moyens pour assurer simultanément toutes les fonctions de routage requises par tous les sous-réseaux LAN de telle sorte qu'un seul disjoncteur assure le routage pour l'intégralité du réseau électrique.

Dans un mode de réalisation particulier, le disjoncteur comporte un mode d'attente (Stand-by) permettant de se substituer à un disjoncteur opérationnel, ses propres fonctions de routeur et ses tables de routage en cas de dysfonctionnement de ce dernier.

Dans un mode de réalisation particulier, le disjoncteur comporte un circuit électronique amovible permettant le remplacement des éléments électroniques défectueux.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1a illustre une architecture générale d'un réseau d'alimentation électrique pour une installation domestique suivant un mode de réalisation.
La figure 1b illustre un exemple de procédé d'association d'un interrupteur avec un IAM components sur un segment, tel qu'un luminaire par exemple.
La figure 2 représente le schéma de principe d'un disjoncteur suivant l'invention.
La figure 3 illustre le schéma de principe d'un module de prise électrique, notamment 2P+T, suivant un mode de réalisation.
La figure 4 illustre le schéma de principe d'un mode de réalisation d'un dispositif de connexion terminale suivant l'invention.
La figure 5 illustre le schéma de principe d'un module d'interrupteur suivant un mode de réalisation de l'invention.
La figure 6A illustre un premier mode de réalisation correspondant à l'organisation de tous les éléments communicants au sein d'un unique réseau LAN et l'assignation IP par un serveur DHCP existant dans le disjoncteurs principal.
La figure 6B illustre la procédure d'activation et de désactivation de la fonction DHCP lorsque celle-ci est incorporée, non pas dans un disjoncteur principal comme illustré dans la figure 6A, mais dans les disjoncteurs divisionnaires du tableau d'abonné.
La figure 7 illustre un second mode de réalisation dans lesquels les disjoncteurs font office de routeur.
La figure 8 illustre la procédure mise en œuvre lors du démarrage d'un dans un routeur-disjoncteur.

### Description d'un mode de réalisation préféré

Dans la description qui suit, les nombreux détails qui figurent sont fournies pour illustrer un mode de réalisation spécifique de l'invention. L'homme du métier pourra toutefois procéder à des aménagements particuliers en fonction de l'architecture envisagée ou des composants électroniques qui seront choisis pour implémenter le procédé suivant l'invention. Il observera en particulier que le procédé de l'invention et les dispositifs de mise en œuvre du procédé sont réalisables indépendamment de certains détails spécifiques ou de méthodes et procédés particuliers qui seront décrits ci-après. A d'autres égards, des détails spécifiques de réalisation de certains éléments constitutifs du réseau communiquant, à la portée d'un homme du métier, ne seront pas décrits afin d'éviter une lourdeur excessive à l'exposé descriptif.

La référence à un soi-disant « mode de réalisation de l'invention » » au travers de la description signifie qu'une caractéristique particulière qui est exposée dans le corps du paragraphe correspondant se trouve au moins dans une réalisation particulière. Par conséquent, les références multiples à un « mode de réalisation » que le lecteur est susceptible de rencontrer à divers endroits du corps de la description ne se référent nullement à un même mode de réalisation, et les caractéristiques correspondantes pourront, au choix de l'homme de l'art, être avantageusement combinés ou considérés indépendamment.

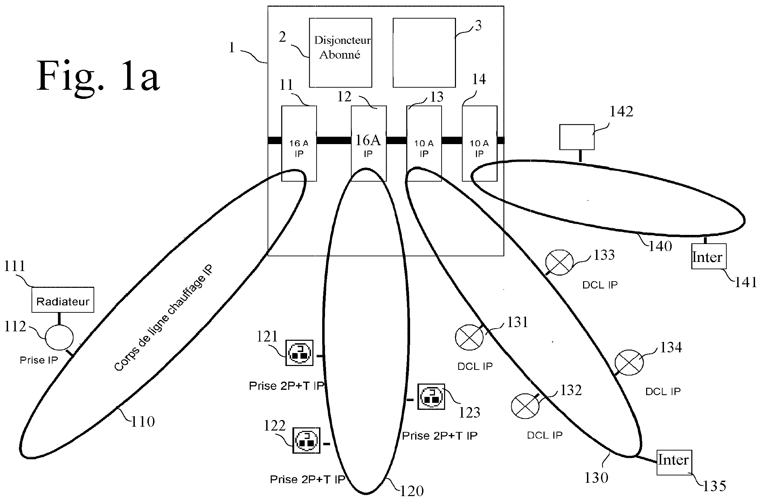

La figure 1a illustre une architecture générale d'un réseau de distribution d'énergie électrique communicant conforme à la présente invention. On considérera plus particulièrement l'exemple d'un réseau monophasé et un homme du métier adaptera aisément l'invention à un réseau triphasé.

Le réseau illustré - volontairement simplifié pour faciliter la compréhension du principe de l'invention, se compose d'un tableau électrique d'abonné 1 de type monophasé, éventuellement, un compteur électrique d'abonné 2 et un disjoncteur différentiel principal 3 installé par l'opérateur national - ou un des opérateurs nationaux - distribuant l'énergie électrique. Il est à noter que, le plus souvent, le compteur 2 se trouvé délocalisé à l'extérieur du domicile de l'abonné.

Le tableau d'abonné du réseau communicant conforme à la présente invention comporte en outre un ensemble de disjoncteurs communicants 11, 12, 13 et 14 respectivement destinés à la protection contre les surcharge des circuits 110 120, 130 et 140.

Pour la clarté et la commodité de l'exposé, le disjoncteur communiquant 11 est un disjoncteur différentiel de 16 ampères, protégeant un circuit de chauffage 110 composé d'un câble électrique présentant une section de 2.5 mm2 et alimentant un radiateur 111 via un dispositif de connexion 112.

De la même manière, le disjoncteur 12 est un disjoncteur différentiel de 16 ampères protégeant un circuit 120 comportant un ensemble de prises électriques communicantes 2P+T 121-124, lesquelles seront décrites ci-après.

Le disjoncteur 13 est un second disjoncteur différentiel de 10 Ampères protégeant un circuit 130 de luminaires comportant un ensemble de dispositif de connexion lumineuse (DCL) 131 -134, ainsi qu'un interrupteur communiquant 135.

Le disjoncteur 13 est un troisième disjoncteur différentiel de 10 Ampères protégeant un circuit d'éclairage 130 comportant un ensemble de dispositif de connexion lumineuse (DCL) 131 -134, ainsi qu'un premier interrupteur communiquant 135.

Le disjoncteur 14 est un quatrième disjoncteur différentiel protégeant lui-également un circuit d'éclairage 140 comportant un second interrupteur communiquant 141 et un dispositif de connexion lumineuse (DCL) 142.

Comme on le voit, l'architecture du réseau communicant selon l'invention est tout à fait conforme à une installation classique cablée, si ce n'est que l'on substitue aux éléments classiques que sont les disjoncteurs, prises, interrupteurs et dispositifs de connexion lumineuse (DCL), les versions qui seront présentées ci-après.

En ce qui concerne le câblage, un homme du métier adaptera les règles classiques, définissant notamment les sections des câbles électriques à employer en fonction des applications souhaitées ainsi que l'organisation du câbles en nombre de « circuits » indépendants en fonction des différents appareils à brancher (chauffage, luminaires, four électrique etc...). Par ailleurs, et afin de clarifier au maximum l'exposé de l'invention, on laissera de côté les considérations liées à la normalisation, bien connues d'un homme du métier et qui s'avèrent fondamentales en matière de sécurité.

Dans le réseau de distribution d'énergie électrique selon l'invention, tous les éléments constitutifs du réseau, tels que les disjoncteurs 11-14, les prises électriques 121-123, les dispositifs de connexion lumineuses (DCL) 131-134 et 142, ainsi que les interrupteurs 135 et 141 sont dotées de circuits électroniques permettant de recevoir une adresse suivant le protocole IP et, de ce fait, deviennent parfaitement communicants au sein même du réseau.

Ces adresses IP sont assignées via un serveur DHCP qui, dans un mode de réalisation particulier, sera intégré dans le disjoncteur d'abonné 2, lequel servira également de passerelle pour le réseau INTERNET, ouvrant ainsi la possibilité au fournisseur national d'énergie électrique - par exemple EDF en France - de devenir très simplement Fournisseur d'Accès pour le réseau Internet (FAI en français ou ISP pour les anglo-saxons - *Internet Access Provider*), autorisant, comme on le verra plus loin, une grande variété de fonctionnalités nouvelles pour les appareils domestiques raccordés au réseau.

Grâce à l'assignation de leur propre adresse IP, deux éléments constitutifs du réseau de distribution d'énergie électrique deviennent parfaitement communicants et il en résulte de multiples possibilités et fonctionnalités supplémentaires. Il devient ainsi possible d'utiliser la grande richesse des protocoles IP, tel que le PING par exemple permettant de tester l'accessibilité d'un élément. En outre, interrupteur et un dispositif de connexion lumineuse deviennent « communicants » et sont susceptibles d'être associés ce qui permet, très simplement, la programmation d'une allumage ou de l'extinction d'un luminaire branché au dispositif de connexion terminale par l'interrupteur considéré. En outre, dès lors qu'un troisième élément reçoit sa propre adresse IP, par exemple un nouvel interrupteur disposé dans un autre endroit de l'immeuble, le dispositif de connexion terminale peut alors être également « associé » à ce nouvel interrupteur et il en résulte alors, très simplement, un dispositif de type « va-et-vient » extrêmement facile à réaliser et qui, de surcroît, ne requiert aucune modification sur le câblage du réseau autre que le remplacement respectif des deux interrupteurs et du dispositif de connexion terminal par leurs versions « communicantes » conformes à la présente invention. De même on pourrait aisément réaliser une fonction de « minuterie » commandé par la combinaison d'un interrupteur et d'une prise communicante selon l'invention.

On notera immédiatement que l'évolution d'une installation déjà existante est très facile puisqu'il suffit, pour commencer la mise en place du réseau communicant selon l'invention, de substituer un ensemble de deux éléments sans modifier le câblage existant.

Ainsi l'usager pourra, comme on le verra ci-après dans l'exposé des procédures d'association entre éléments, remplacer un interrupteur et un dispositif DCL déjà existant par un ensemble comportant un interrupteur communiquant et un dispositif DCL communicant conformes à la présente invention pour obtenir, immédiatement, la possibilité d'allumer ou d'éteindre un luminaire au moyen d'un interrupteur disposé à un autre emplacement que l'emplacement habituel.

En outre le procédé suivant l'invention permet de s'affranchir de la nécessité de réaliser un câblage Ethernet spécifique puisqu'il sera possible, et cela sera particulièrement visible avec le second mode de réalisation décrit ci-après, d'intégrer une architecture « communicante » directement au sein du réseau électrique. En particulier, tout appareil électrique domestique simplement branché sur le réseau devient, avec le procédé suivant l'invention, un élément communicant qui s'intègre au réseau et bénéficie des possibilités offertes par ce dernier. En effet, le branchement de cet appareil sur le réseau lui permettra de recevoir, outre l'énergie électrique nécessaire à son fonctionnement, les paramètres nécessaires à une communication à distance (adresse IP, masque de réseau et passerelle) via le réseau Internet.

Le procédé de l'invention permet ainsi de joindre complètement la distribution de l'énergie et la fourniture de communication via le réseau domestique de distribution d'énergie et cela de manière complètement transparente pour l'utilisateur. En effet, contrairement aux systèmes déjà connus, par exemple le procédé Tébis de la société HAGER, il n'est nullement nécessaire pour l'usager de s'investir dans la mise en place d'un réseau, notamment d'introduire une " passerelle " dans son armoire électrique , pour permettre la communication via le réseau Internet.

Avec l'invention, chaque élément constitutif du réseau, par exemple les interrupteurs et les dispositifs de connexion luminaires (DCL), reçoivent automatiquement une adresse IP du serveur DHCP disposé dans un disjoncteur et par conséquent les moyens de communication vers l'extérieur sans que l'utilisateur n'ait à s'en préoccuper. Dans la plupart des cas, l'utilisateur n'aura même pas besoin d'être informé de l'existence de ces nouvelles fonctionnalités qui lui apporteront un confort supplémentaire sans qu'il n'ait besoin de se préoccuper de l' "origine " ou des moyens techniques mis en œuvre pour assurer ces nouvelles fonctionnalités.

C'est ainsi qu'un dispositif, par exemple un appareil ménager comme un lave-vaisselle que l'usager va brancher sur le réseau par sa prise, recevra automatiquement via sa prise d'alimentation électrique les paramètres de configuration nécessaires (adresse IP, masque de réseau et adresse de passerelle ou *Gateway*) à une éventuelle communication via le réseau Internet, et notamment vers les serveurs de maintenance du constructeur...

Comme on le voit, l'invention a pour avantage de rendre complètement inutile un autre moyen d'accès à Internet, notamment basé sur un abonnement avec un fournisseur d'accès spécifique. Par ailleurs, l'invention ne requiert pas non plus l'établissement de réseaux sans fil (de type WIFI) pour permettre la communication via le réseau Internet puisque, en tout point du domicile de l'abonné, un appareil domestique reçoit simultanément son courant électrique et des possibilités de communication via le réseau Internet.

Outre cette possibilité de connexion au réseau INTERNET, il convient de souligner, et cela est déjà un avantage considérable de la présente invention, que deux éléments du réseau deviennent parfaitement communicants, autorisant dès alors des procédures d'associations entre des composants.

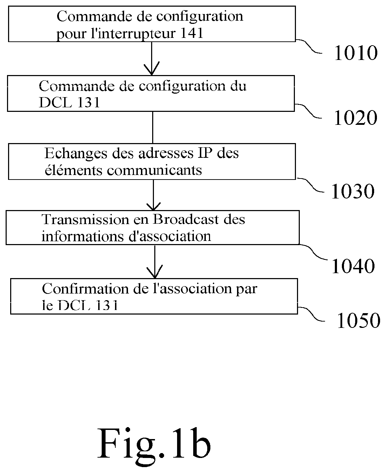

La figure 1b illustre un exemple de procédé d'association d'un interrupteur communicant avec un autre élément communicant, tel qu'un luminaire par exemple.

La procédure démarre par une étape 1010 correspondant à un commande de configuration de l'interrupteur 114. Cette configuration pourra découler, par exemple, d'une série de dix commutations réalisées par l'utilisateur et venant placer l'interrupteur dans un mode de configuration.

Le procédé poursuit ensuite avec une étape 1020 similaire, consistant à placer le second élément - tel qu'un DCL 131 - dans un mode de configuration.

Dans une étape 1030, les deux éléments échangent leurs adresses IP respectives créant ainsi une association entre eux.

Optionnellement, dans une étape 1040, les informations d'association sont transmises par diffusion au réseau de manière à permettre une sauvegarde de cette association en un ou plusieurs points centraux.

Dans une étape 1050, le procédé vient confirmer l'association réalisée, par exemple par la commande d'un clignotement du luminaire.

On réalise ainsi, très simplement, l'association d'un interrupteur donné avec un DCL particulier. On pourra ainsi, suivant des procédures similaires, réaliser l'association d'un nombre quelconques d'éléments communicant du réseau.

Grâce à cette procédure d'association et au fait que chaque élément constitutif du réseau dispose d'une adresse IP, on peut venir commander tout élément du réseau à partir d'un autre élément du réseau. On notera en particulier, qu'il est même possible que l'interrupteur 141 - disposé dans le circuit 140 - vienne commander l'allumage ou l'extinction d'un luminaire 131 disposé dans le circuit 130.

Cela est rendu possible par le fait que l'on dissocie, avec le procédé suivant l'invention, les circuits distribuant l'énergie électrique et donc la puissance - qui sont départagés au sein des différents « circuits » protégés individuellement par leurs disjoncteurs associés, et la partie « commande » laquelle se fonde sur le transport de paquets IP - éventuellement via les câbles électriques et au travers des disjoncteurs communicants, pour commander l'allumage et l'extinction des luminaires.

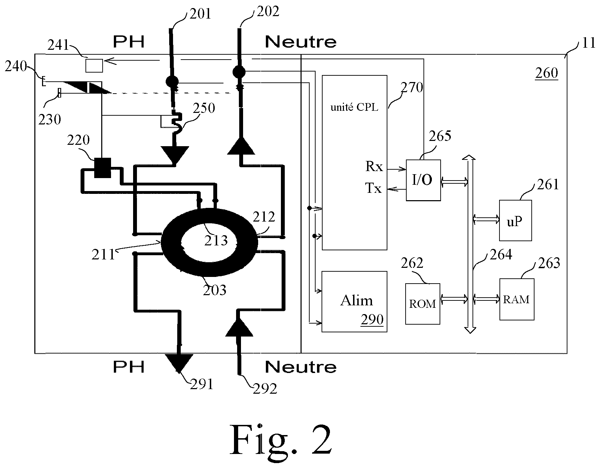

La figure 2 illustre le schéma de principe d'un disjoncteur communicant conforme à la présente invention, tel que le disjoncteur 11 par exemple.

D'une manière générale, le disjoncteur 11 comporte les éléments classiques d'un disjoncteur de tableau électrique, différentiel ou non, comportant un bornier d'entrée pour les deux pôles principaux PHASE et NEUTRE et un bornier de sortie composées des pôles 291 et 292 pour l'utilisation. Le disjoncteur 11 comporte en outre un tore magnétique 210 comportant trois bobinages, à savoir un bobinage de phase 211, un bobinage de neutre 212 et un bobinage de détection 213. Le bobinage de détection 213 sert à alimenter un électroaimant 220 permettant d'actionner un déclencheur 230 permettant d'ouvrir le circuit de phase. Un bouton d'enclenchement 240 permet de réenclencher le disjoncteur pour le repositionner en mode de fonctionnement normal. Un dispositif de déclenchement magnéto-thermique 250 complète la partie « disjoncteur » du dispositif 11.

Les bobinages de phase et neutre servent à faire circuler un flux magnétique au sein du tore 203 qui, en principe, s'annulent dans une situation de fonctionnement normale. En situation anormale, lorsque les deux courants de phase et de neutre ne sont pas égaux, la bobine de détection détecte un flux résiduel qui permet alors l'activation de l'électroaimant 220 et, par suite, le déclenchement du disjoncteur.

Il est à noter que les éléments qui viennent d'être décrits ne correspondent qu'à un mode de réalisation classique d'un disjoncteur différentiel. Un homme du métier pourra évidemment adapter l'invention à d'autres schémas de disjoncteurs existants.

Le disjoncteur communicant 11 comporte, outre sa partie fonctionnelle « disjoncteur », un circuit électronique 260 qui , dans un mode de réalisation particulier, est amovible de manière à permettre un changement aisé en cas de dysfonctionnement.

Le circuit électronique 260 comporte un microprocesseur 261 doté de mémoire volatile et non volatile pour le stockage des données et des instructions d'un microprogramme. On a représenté ainsi une mémoire de type RAM 263 et une mémoire de type ROM 262 communiquant avec le microprocesseur 261 via un bus 264. Il est à noter qu'un homme du métier pourra indifféremment opter pour d'autres types de mémoire de type EEPROM, FLASH etc... Une unité d'entrée sortie I/O 265 permet la communication entre le processeur avec des éléments externes, et notamment un dispositif de commande à relais 241 permettant de commander de manière logicielle, le cas échéant, le déclenchement du disjoncteur, et également un circuit à courants porteurs en ligne (CPL) permettant une communication bi-directionnelle via le circuit phase-neutre.

Le circuit CPL 270 est un circuit qui est bien connu d'un homme du métier, désigné dans la littérature anglo-saxonne sous l'appellation POWERLINE TRANSCEIVER, qui ne nécessite pas de développement particulier. Il suffit d'observer qu'un circuit comporte en général des circuits électroniques de couplage permettant de transmettre et de recevoir, respectivement, des données Tx DATA et Rx DATA sur les conducteurs phase et neutre via une porteuse modulée, par exemple suivant une modulation de type FSK. On pourra le cas échéant se reporter aux spécifications des fabricants de circuits intégrés. Un exemple d'un circuit permettant l'émission et la transmission de type FSK (Frequency Shift Keying) est donnée dans le document édité par la société STMICROELECTRONICS SA sous la référence ST5740 FSK POWER LINE TRANSCEIVER - DESIGN GUIDE FOR AMR , que l'on trouvera notamment à l'URL suivante : http://www.st.com/stonline/products/literature/an/12791.htm

On notera en particulier, que les circuits CPL connus sont en général conçus pour permettre le fonctionnement simultané et optimal, sur un corps de ligne donné, de quinze CPL. Il convient d'observer toutefois que ce nombre n'est nullement une limite et qu'un homme du métier pourra accroître ce nombre en procédant à des adaptations spécifiques à sa portée.

Le circuit électronique 260 comporte en outre un circuit spécifique d'alimentation 290 permettant de générer une alimentation continue à partir du courant prélevé sur les deux pôles PHASE et NEUTRE. Dans le schéma de la figure 2, l'alimentation du circuit 290 est prélevé directement en amont du dispositif de déclenchement magnéto thermique 250 de manière à mettre l'intégralité du disjoncteur hors « réseau électrique de puissance - lors d'un déclenchement.

Dans un mode de réalisation particulier, on intègre au sein du circuit 290 une batterie normalement rechargée par le réseau électrique, qui permet le maintien du fonctionnement de la partie intelligente du disjoncteur même lorsque ce dernier est dans un état de déclenchement.

Dans un autre mode de réalisation, on connecte le circuit d'alimentation 290 sur les pôles PHASE et NEUTRE qui sont en aval du dispositif de déclenchement magnétothermique de manière à permettre le maintien du fonctionnement du circuit 260 même lorsque le disjoncteur aura « disjoncté ».

Le circuit électronique 260 du disjoncteur 111 comporte dans sa mémoire morte ou ROM 262, outre les instructions de micro-programme permettant la mise en œuvre des procédures décrites ci-après, une adresse MAC (MEDIA ACCESS CONTROL) suivant le protocole IP, permettant d'identifier de manière unique le circuit électronique considéré. Comme on le verra plus loin, cette adresse MAC est utilisée lors des phase de configuration lors de la première mise sous tension du disjoncteur 11, avant l'assignation d'une adresse IP.

La mémoire non volatile permet en outre le stockage des adresses IP et des tables de routage des éléments constitutifs du réseau domestique ou industriel, de manière à permettre au disjoncteur 111 de conserver une « copie » de l'intégralité des paramètres de configuration, ainsi que des tables d'associations (interupteurs - dispositif DCL) également stockées dans les autres disjoncteurs.

Dans un mode de réalisation particulier, afin de faciliter la maintenance du réseau, le disjoncteur 11 comporte un serveur WEB intégré pouvant accéder à une mémoire (non représentée) permettant le stockage de tables de correspondances pour des adresses MAC ou IP des composants du réseau de distribution électrique qui seront décrits ci-après.

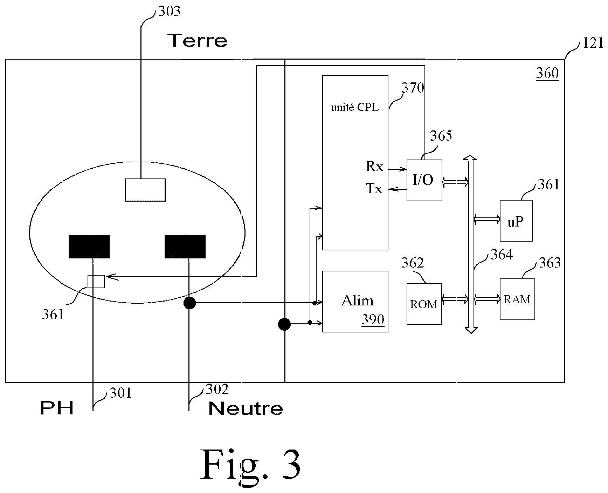

La figure 3 illustre un mode de réalisation d'une prise murale 121 de type 2P+T permettant le branchement électrique d'un appareil domestique. Le dispositif comporte un bornier ayant les deux pôles PHASE et NEUTRE, respectivement 301 et 302, et comportant en outre une borne pour le conducteur de terre 303. Dans un mode de réalisation particulier, la prise comporte un commutateur ou relais 361 commandé par un circuit 360 et susceptible de déconnecter le pole de phase afin de déconnecter, par voie logicielle, l'appareil domestique s'y trouvant branchée.

La prise 121 comporte en outre un circuit électronique 360 comportant une architecture similaire à celle déjà présentée pour le disjoncteur, et que l'on reprendra très rapidement pour ne pas surcharger l'exposé.

Le circuit électronique 360 comporte un microprocesseur 361 communiquant via son bus interne 364 avec de la mémoire vive RAM 363 et de la mémoire non volatile 362 (ROM ou EEPROM), ainsi qu'avec une unité d'entrées/sorties 365 permettant la commande, via le processeur, du commutateur 361 mais également la communication avec l'unité CPL 370 similaire à l'unité 270 décrite en relation avec la figure 2.

Le circuit électronique 360 comporte en outre un circuit d'alimentation 390 permettant de générer une alimentation continue à partir du courant prélevé sur les deux pôles PHASE et NEUTRE. En cas de besoin on pourra prévoir une batterie rechargeable permettant le maintien en fonctionnement du processeur 361 même en cas de mise hors tension des pôles 301 et 302 par le disjoncteur 12 de la figure 1.

De même que pour le disjoncteur 11, la prise murale 121 comporte dans la mémoire ROM 362 une adresse MAC identifiant le circuit électronique 360, et des moyens de stockage d'une adresse IP susceptible d'être assignée par le serveur DHCP de l'un des disjoncteurs communicants 1, et 11-14.

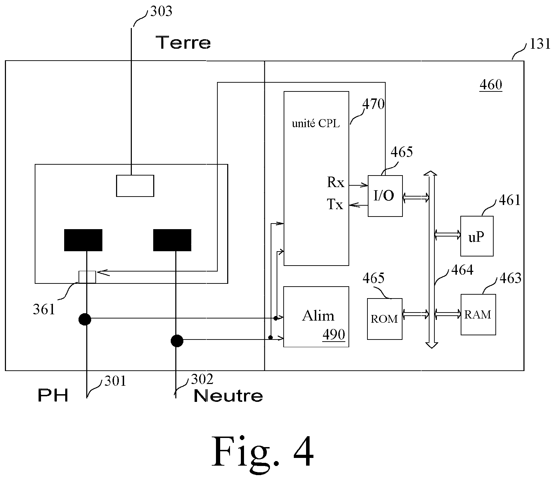

La figure 4 illustre un mode de réalisation d'un dispositif de connexion lumineuse (DCL) 131 permettant la connexion directe d'un luminaire sur le réseau communicant conforme à la présente invention. Comme l'homme du métier l'aura compris, le dispositif de connexion lumineuse présente une architecture fonctionnelle très proche de celle de la prise 2P+T qui vient d'être décrite. C'est ainsi que l'on retrouve les pôles PHASE, NEUTRE et TERRE, respectivement 401, 402 et 403, ainsi qu'un commutateur ou relais 461 commandé par un circuit électronique 460 permettant de déconnecter la phase du réseau électrique .

Le circuit électronique 460 du DCL 131 comporte, de même que pour le disjoncteur 110 et la prise 2P+T 121, un microprocesseur 461 communiquant via un bus 464 avec une mémoire volatile RAM 463, ainsi qu'une mémoire non volatile 462 permettant le stockage d'une adresse MAC ainsi que d'une adresse IP , et un circuit d'entrées sorties 465 permettant notamment la commande du relais 461 ainsi qu'une communication full duplex avec l'unité CPL 470. Un circuit d'alimentation 490 génère le courant d'alimentation nécessaire au circuit électronique 460 et pourra, comme pour les circuits précédents, être doté d'une batterie rechargeable.

Dans un mode de réalisation particulier, le DCL 131 est réalisé sous la forme d'une douille normalisé - à culot ou à baïonnette - permettant la mise en œuvre du procédé selon l'invention même dans les installations les plus anciennes. Plus particulièrement la douille comporte
- un culot permettant le branchement d'une ampoule électrique, ledit culot recevant deux conducteurs respectivement phase et neutre,
- un dispositif de commutation commandable permettant de couper le courant destiné à l'alimentation de ladite ampoule,
- un dispositif de commande alimenté par les deux conducteurs phase et neutre et comportant des moyens de communication IP permettant l'échanges de messages destiné à la commande ou non de l'ampoule électrique branchée sur la douille.

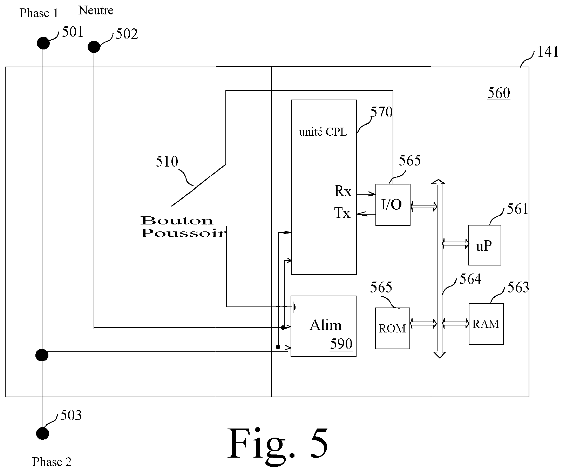

La figure 5 illustre un mode de réalisation d'un interrupteur communicant 141 suivant l'invention qui comporte une borne de phase 501 et une borne de neutre 503. Optionnellement, l'interrupteur pourra comporter une borne supplémentaire pour permettre la connexion d'un second cable électrique de manière à permettre une substitution directe d'un interrupteur simple allumage déjà existant par un interrupteur communicant selon l'invention. Un homme du métier observera que les deux bornes de phase seront connectées en interne de manière à permettre la passage directe du courant électrique quel que soit la possible du bouton poussoir 510.

L'interrupteur communicant 141 comporte un circuit électronique 560 comportant un microprocesseur 561 communiquant via un bus 564 avec une mémoire volatile RAM 563, ainsi qu'une mémoire non volatile 562 permettant le stockage d'une adresse MAC ainsi que d'une adresse IP, et un circuit d'entrées sorties 565 permettant une communication full duplex avec l'unité CPL 570. Un circuit d'alimentation 590 génère le courant d'alimentation nécessaire au circuit électronique 560 et pourra, comme pour les circuits précédents, être doté d'une batterie rechargeable.

L'interrupteur communicant 141 qui est illustré dans la figure 5 est conçu pour être connecté aux deux pôles phase et neutre, lesquels sont en principe présent dans un boîtier mural encastré. Il peut arriver cependant que dans une installation déjà existante, le boîtier dans lequel est logé l'interrupteur classique ne comporte pas le conducteur de neutre.

Pour permettre néanmoins la substitution de l'interrupteur classique par un interrupteur communicant, on pourra alors utiliser un interrupteur communicant alimenté exclusivement par batterie et communicant au moyens d'une liaison par onde radio. Comme pour le disjoncteur 111, le circuit électronique 560 de l'interrupteur 141 est amovible permettant le remplacement adéquat de la partie électronique (susceptible de tomber en panne) et/ou la recharge de la batterie interne.

Comme on le voit, tous les éléments constitutifs du réseau de distribution d'énergie électronique comporte un circuit électronique, respectivement 160, 260, 360, 460, 560, permettant le stockage de l'adresse MAC, de l'adresse IP assignée par le serveur DHCP opérant au sein du réseau, ainsi que la mise en œuvre des procédures de configuration, d'initiatialisation et des associations qui seront décrites ci-après.

D'une manière générale, tous les circuits électroniques seront implémentés au moyen de logique cablée et de préférence par des circuits intégrés ou microélectroniques (*hardware*) à base de microprocesseurs ou micro-calculateurs sous le contrôle de micro logiciel (*software*) et toutes combinaisons de circuits et de composants intermédiaires.

Les composants qui viennent d'être décrits peuvent être combinées de diverses manières dans le but de réaliser une installation domestique ou industrielle de distribution d'énergie électrique.

Afin d'illustrer la grande généralité de l'invention, on va à présent décrire deux modes de réalisation particuliers offrants divers avantages et permettant de tirer profit de la grande flexibilité du réseau constitué.

### I. Premier mode de réalisation

Le premier mode de réalisation que l'on décrit à présent est particulièrement adapté à la mise en œuvre du procédé de l'invention dans une installation simple permettant de tirer avantage des nouvelles fonctionnalités découlant des dispositifs communicants décrits précédemment.

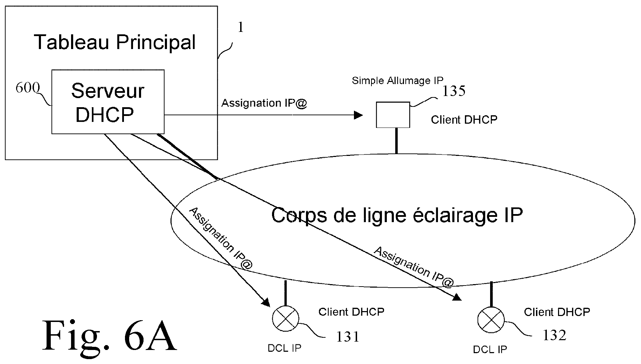

La figure 6A illustre ce premier mode de réalisation dans lequel le réseau électrique, dans son intégralité, constitue un **unique réseau LAN** dans lequel tous les constituants disposent de leur propre adresse IP privée et peuvent ainsi communiquer avec tout autre composants du réseau.

Dans ce premier mode de réalisation, chacun des composants (disjoncteur, prise 2P+T , dispositif DCL etc...) obtient son adresse IP au travers d'un protocole d'assignation d'adresse. Dans un mode de réalisation particulier, on adoptera l'un des protocoles suivants utilisés dans le domaine des routeurs, à savoir le protocole RARP (*Reverse Adress Resolution Protocol*) ou BootP (*BootStrap Protocol*) ou encore, suivant un mode de réalisation préféré, le protocole dit DHCP (*Dynamic Host Configuration Protocol*)*.* On se référera plus particulièrement aux ouvrages de télécommunications traitant de l'adressage dans les routeurs et notamment l'ouvrage « INTERNET WORKING WITH TCPIIP - Volume I: Principles, Protocols and Architecture » by Douglas E. Comer, Prentice Hall International Editions, 3rd Ed. , 1995, ISBN 0-13-216987-8, ou encore « TCP/IP lllustrated Volume 1, The Protocols », by W. Richard Steves, ADDISON-WESLEY PUBLISHING COMPANY, 1994, ISBN 0-201-63346-9.

A cet effet, on insère dans le réseau de distribution d'énergie électrique un serveur conforme au protocole choisi, ie DHCP, BootP ou RARP selon le cas.

Dans un mode particulier de réalisation, le serveur DHCP sera présent dans un dispositif simplement branché au réseau électrique, installé par exemple dans un modem routeur spécifique offrant l'accès au réseau Internet. Il est à noter qu'un tel modem aura, par rapport aux modems routeurs déjà connus, une interface CPL spécifique permettant de faire transiter directement les paquets IP sur le réseau électrique.

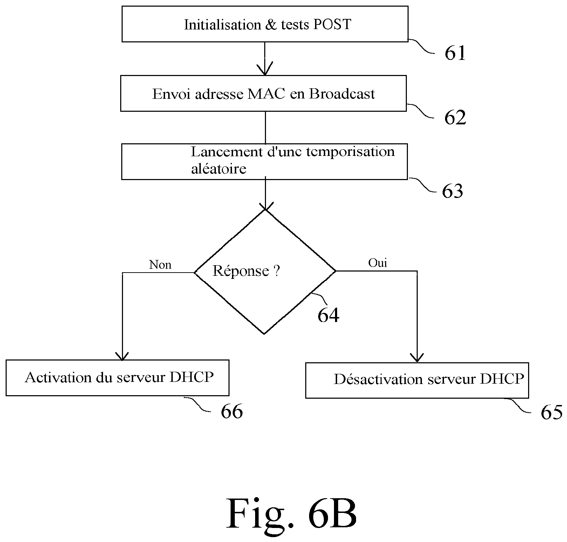

Alternativement, le serveur DHCP pourra être présent dans le disjoncteur principal connecté au fournisseur national d'énergie électrique, comme cela est illustré dans la figure 6. En effet, comme on le voit, le tableau d'abonné 1 comporte au moins un disjoncteur qui intègre un serveur DHCP 600 susceptible d'attribuer une nouvelle adresse dès lors qu'un nouvel élément - désigné un client DHCP - en sollicite la demande.

Alternativement, lorsque le fournisseur local ne fournit pas un tel service, ce sera l'un des disjoncteurs communicants 11, 12, 13 ou 14 qui remplira le rôle de serveur DHCP.

Afin d'éviter, le cas échéant, la collision entre plusieurs serveurs DHCP, il pourra être avantageux de prévoir, pour chacun des disjoncteurs, une procédure d'activation ou de désactivation de son serveur DHCP intégré de manière à éviter les éventuelles collisions entre les deux serveurs de deux disjoncteurs distincts.

Un tel mécanisme est illustré par exemple dans la figure 6B qui montre une procédure comportant les étapes suivantes mises en œuvre lors du démarrage d'un disjoncteur communicant, par exemple le disjoncteur 14.

La procédure comporte une première étape 61 au cours de laquelle le circuit électronique 260 lance une procédure de tests internes après démarrage *(Power On Self Test)*

Puis, dans une étape 62, le disjoncteur communicant 14 transmet sa propre MAC adresse en BROADCAST de manière à la communiquer à tous les éléments constitutifs du réseau de distribution d'énergie électrique.

Dans une étape 63, le disjoncteur communicant 14 lance une temporisation comportant un délai aléatoire. L'utilisation d'un délai aléatoire permet de s'assurer qu'un seul disjoncteur communiquant activera son propre serveur DHCP même lorsque l'usager met sous tension tous les disjoncteurs en même temps.

Dans une étape 64, le disjoncteur communicant 14 effectue un test pour vérifier la réponse à sa requête DHCP.

Si une réponse est intervenue avant l'expiration du délai prévue dans la temporisation de l'étape 63, alors le disjoncteur communicant 14 désactive son propre serveur DHCP dans une étape 65.

Dans le cas contraire, le procédé va à une étape 66 au cours duquel il met en service son propre serveur DHCP.

De cette manière on assure qu'un serveur DHCP fonctionne de manière transparente pour l'utilisateur qui n'a donc pas à se préoccuper à constituer un réseau LAN accessoire, comme cela est le cas pour le système TéBis de la société HAGER.

On va décrire à présent un second mode de réalisation plus avantageux encore dans lequel, outre la fonction DHCP, chaque disjoncteur intègre en outre une fonction routeur.

### II. Deuxième mode de réalisation.

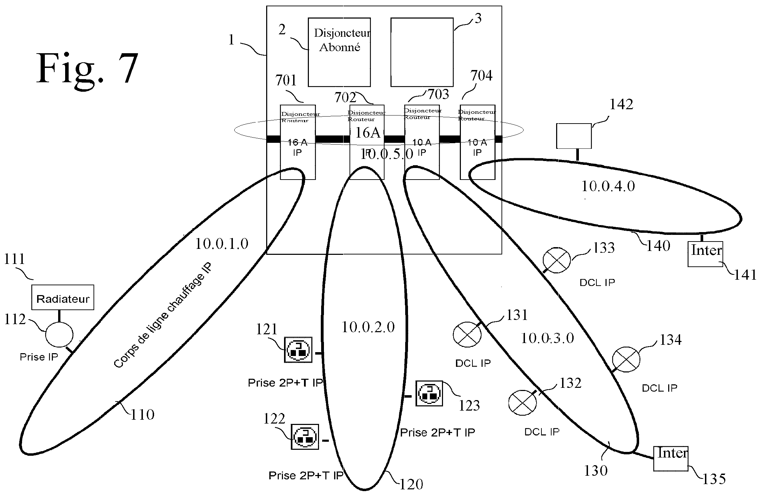

La figure 7 illustre un second mode de réalisation plus sophistiqué et plus avantageux qui convient plus particulièrement aux installations complexes, telles que les installations industrielles.

En effet, dans les installations complexes, le nombre de composants constitutifs du réseau électrique peut devenir très vite important et, par suite, difficile à gérer pour l'utilisateur.

Par ailleurs, il peut être souhaitable d'améliorer les possibilités de contrôle des composants du réseau et, à cet effet, il devient souhaitable de décomposer un réseau donné en sous-ensembles, ou sous-réseaux correspondant chacun à un corps de ligne ou calqués sur les corps de lignes par exemple.

La présente invention permet, et ceci est un avantage considérable, de segmenter le réseau électrique unitaire (puisqu'il se compose uniquement de deux conducteurs PHASE et NEUTRE dans le cas d'un réseau monophasé) de manière à ce qu'il ne correspondent plus, comme c'est le cas avec le premier mode de réalisation décrit précédemment, à un LAN unique, mais au contraire à une combinaison de sous-réseaux LAN , lesquels pourront avantageusement - mais non exclusivement - correspondre aux corps de ligne.

Il en résulte alors, comme on le verra ci-après, une plus grande facilité de la gestion du réseau mais également de multiples possibilités et nouvelles fonctionnalités, notamment en matière de sécurité.

L'invention permet de réaliser cette segmentation comme on va le voir à présent avec l'exemple illustratif de la figure 7.

La figure 7 montre que chaque corps de ligne ou circuit est organisé de manière à correspondre à un réseau LAN (*Local Area Network*) disposant de sa propre plage d'adresses privées. Le circuit 110 correspondant ainsi au réseau 10.0.1.0 ; le circuit 120 correspond au réseau 10.0.2.0 ; le circuit 130 correspond au réseau 10.0.3.0 ; le circuit 140 correspond au réseau 10.0.4.0, etc...

Par ailleurs, les disjoncteurs du tableau électrique - tels que les disjoncteurs 701-704 de la figure 7 - comportent à présent une fonction routeur permettant le passage des paquets ou data grammes IP d'un sous-réseau à un autre, et sont eux-même organisés au sein d'un LAN spécifique, tel que par exemple 10.0.5.0 dans la figure 7, de manière à constituer un cœur de réseau (*Core Network*) dont la fonction sera de router les paquets IP émanant d'un premier circuit vers un second circuit et, par ailleurs, permettant d'acheminer des paquets IP des éléments du réseau vers le réseau INTERNET et, inversement, de permettre l'acheminement de paquets IP depuis le réseau INTERNET directement au sein des circuits électriques.

Alternativement, toutes les fonctions routeurs mises en œuvre dans les différents sous-segments, pourront être concentrées dans un unique disjoncteur routeur, lequel comportera un processeur et un logiciel qui permettra l'instanciation de plusieurs fonctions routeurs.

Dans un souci de simplification, les éléments de la figure 7 qui sont communs avec ceux déjà illustrés dans la figure 1 portent les mêmes références.

C'est ainsi que le disjoncteur-routeur 701 protège ainsi le circuit 110 comportant le radiateur 111 et le dispositif de connexion 112; De même, le disjoncteur routeur 702 protège le circuit ou corps de ligne 120 comportant les prises électriques communicantes 2P+T 121-124; Le disjoncteur routeur 703 protège le circuit 130 comportant les dispositifs de connexion lumineuse (DCL) 131 -134, et l'interrupteur communicant 135 ; et enfin, le disjoncteur routeur 704 protège le corps de ligne d'éclairage140 comportant le second interrupteur communiquant 141 et le dispositif de connexion lumineuse (DCL) 142.

D'une manière pratique, on notera que les disjoncteurs routeurs pourront être avantageusement réalisés conformément à l'architecture matérielle décrite en relation avec la figure 2. A cet effet, la mémoire non volatile (EEPROM ou FLASH) 262 pourra intégrer les tables de routage permettant l'échange de paquets IP entre les différents circuits LAN. Par ailleurs, ces tables de routage seront constituées soit manuellement, soit dynamiquement et, dans ce cas particulier, grâce à un protocole de routage de type RIP (*Routing Information Protocol*) dont la spécification pourra être trouvée dans le RFC 1058 (Hedrick 1988) . Brièvement, ces tables de routage comportent l'adresse IP du réseau de destination et l'adresse IP du « *next-hop* » routeur sur le chemin vers le réseau de destination.

L'architecture de ce second mode de réalisation décrite précédemment apporte une grande flexibilité dans le contrôle du réseau de distribution électrique et dans l'apport d'un grand nombre de fonctionnalités qui deviennent possibles.

En premier lieu, le système d'adressage que permet le second mode de réalisation facilite considérablement le répérage et l'identification des différents éléments du réseau de distribution d'énergie. En effet, il devient très facile d'identifier, le cas échéant, tous les éléments appartenant à un même circuit électrique et protégé par un même disjoncteur. En particulier, lorsque le disjoncteur routeur intègre la fonction DCHP, il devient facile, dans le second mode de réalisation d'identifier les éléments appartenant à un même circuit puisque, de facto, ils appartiennent à un même LAN (ou LAN virtuel) et se verront attribuer une adresse appartenant à une même plage d'adresse.

En particulier, il devient ainsi très facile de faire correspondre des plages d'adresses avec des étages particulier d'un immeuble, voire même des ensemble d'étages ou des ensembles de locaux immobiliers...

En second lieu, Il devient alors possible également de mettre en place des règles de sécurité propres à chaque circuit ou à un ensemble de circuits. Ainsi, par exemple, on pourra décider que certains circuits particuliers ou certains locaux particuliers d'un immeuble ne pourront faire l'objet d'association spécifiques comme celle décrite en relation avec la figure 1B. Plus généralement, on pourra décider également que seuls certains sous-ensembles ou circuits d'un réseau électrique pourront être accessibles via le réseau Internet. Il sera ainsi très facile d'autoriser la commande de l'ouverture d'un portail via le réseau Internet, et plus spécifiquement via un téléphone mobile de type 3G - mais non la commande de certains autres circuits électriques d'un immeuble etc...

En troisième lieu, il devient possible de réaliser des combinaisons encore plus complexes accroissant la flexibilité de la commande, basées sur l'organisation logique de LAN dits « virtuels » composés d'éléments appartenant à des circuits différents. Cette flexibilité accrue permet d'envisager toutes sortes de scénarios d'allumage et d'extension, des plus simples aux plus sophistiquées, combinant la variations les plus complexes telles que minuteries , allumage ou extension...

En quatrième lieu, le second mode de réalisation qui a été décrit précédemment facilite considérablement la gestion de la maintenance et notamment la tolérance de panne. En effet, lorsque tous les routeurs sont identiques et intègrent les ressources matérielles (processeur 261, mémoires 262-263 notamment) et logiques adéquates, ils sont tous capables de se substituer les uns aux autres en cas de panne avérée de l'un d'entre eux.

Dans un mode de réalisation préféré, comme cela a été évoqué précédemment, un seul disjoncteur routeur - par exemple le disjoncteur routeur 701 - met en œuvre toutes les fonctions de routage virtuel permettant le routage des paquets au sein de l'installation électrique et, notamment, contient l'intégralité des tables de routage au sein de sa mémoire interne. Les autres routeurs 702-704, structurellement identiques à ce dernier, comportent eux également une copie des tables de routage mises en œuvre dans le routeur opérationnel et sont configurés dans un mode d'attente (*stand-by* dans la littérature anglo-saxonne) afin de prendre le relais dès qu'intervient une défaillance du routeur opérationnel 701.

En effet, lorsque intervient une défaillance du routeur 701, il est à noter que, en général, la partie « disjoncteur» de ce module restera opérationnelle puisque celle-ci ne comporte aucun composant électronique sensible. Par conséquent, le circuit électrique 110 restera alimenté et protégé contre les surcharges comme lors du fonctionnement normal.

En revanche, et cela constitue un avantage considérable de la présente invention, la fonction « routage » qui n'est plus opérationnelle au sein du disjoncteur 701 peut être logiquement remplacée par l'un des disjoncteurs en attente, par exemple le disjoncteur 702 qui prend le relais après une phase d'activation. Ce même disjoncteur peut en outre avertir l'utilisateur de la défaillance par tout moyen approprié, voir par un courriel transmis directement à l'adresse de l'utilisateur.

Les disjoncteurs 702-704 peuvent détecter une défaillance du disjoncteur opérationnel 701 au moyen de tout mécanisme de polling approprié.

Dans un mode de réalisation particulier les disjoncteurs routeurs comportent un circuit électronique amovible disposé dans un tiroir et comportant l'intégralité des éléments électroniques, tels que le processeur 261, la mémoire 262 ou 263 de la figure 2 etc... De ce fait, il devient très aisé de remplacer un circuit amovible défaillant par un circuit neuf, à l'instar dans anciens « fusibles » que l'utilisateur remplaçait par le passé.

Il est à noter, et cela constitue un avantage considérable de la présente invention, que la mise en œuvre des protocoles de routage permet l'apprentissage automatique des circuits amovibles nouvellement mis en place dans un disjoncteur routeur donné.

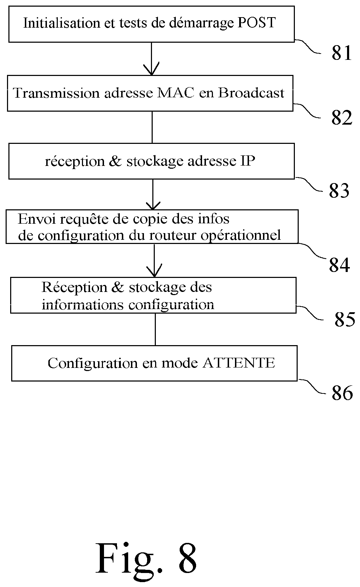

La figure 8 illustre la procédure mise en œuvre dans un disjoncteur communicant permet d'acquérir, lors de sa mise sous tension, les informations nécessaires pour le mettre dans un mode d'attente ou (stand-by), dans l'attente d'une mise en mode opérationnelle.

Cette procédure est notamment mise en œuvre lorsque l'on installe et branche pour la première fois un disjoncteur communicant conforme à la présente invention. C'est également la procédure qui est mise en œuvre lorsque, à la suite d'une défaillance physique du module électronique amovible 260 logé dans un receptable du disjoncteur - à la manière des anciens « fusibles » bien connus des usages, on insère un nouveau module électronique destiné à remplacer le module défaillant.

La procédure commence à la suite d'une étape 81 d'initialisation au cours de laquelle le circuit électronique effectue une série de tests interne ou tests POST.

Puis, dans une étape 82, le circuit électronique 260 transmet en mode BROADCAST son adresse MAC .

Dans une étape 83, puisque l'on suppose qu'un disjoncteur communicant comportant déjà un serveur DHCP actif est opérationnel, le module 260 nouvellement installé et branché reçoit son adresse IP et la stocke au sein de sa mémoire non volatile.

Puis dans une étape 84, le procédé génère une requête visant à obtenir une copie de la mémoire du routeur opérationnel, et des informations stockées dans ce routeur comportant, notamment, les différentes tables de routage ainsi que les configurations de VLAN (*Virtual Lan*).

Le disjoncteur opérationnel transmet cette copie des informations de configurations, dont notamment les tables de routage, et ces informations sont reçues et stockées au sein de la mémoire non volatile du disjoncteur 114 dans une étape 85.

Puis, dans une étape 86, le disjoncteur 114 nouvellement installé s'autoconfigure dans un mode d'attente, semblable au mode dans lequel se trouvent déjà les autres disjoncteurs en attente d'activation de leur fonctions de routage.

## Revendications

1. Un procédé de communication entre deux éléments constitutifs d'un réseau de distribution d'énergie électrique d'une installation domestique ou industrielle monophasée ou triphasée le procédé comportant les étapes suivantes :
- l'assignation d'une première adresse IP à un premier élément constitutif du réseau de distribution, dans lequel ledit premier élément est un interrupteur mural (141) comportant un premier circuit électronique (560) comprenant des premiers circuits mémoires (563, 564) configurés pour le stockage de ladite première adresse IP assignée lors d'une phase de configuration;
- l'assignation d'une seconde adresse IP à un second élément constitutif du réseau de distribution en énergie électrique, dans lequel ledit second élément est une prise murale 2P+T (121) ou un Dispositif de Connexion Lumineuse DCL (131) comportant un second circuit électronique (360, 460) comprenant des seconds circuits mémoire (362, 363, 463, 465) configurés pour le stockage de ladite seconde adresse IP assignée lors d'une phase de configuration,
dans lequel la phase de configuration comporte l'utilisation de l'adresse MAC de l'interrupteur (141) et de l'adresse MAC de la prise murale 2P+T (121) ou dudit Dispositif de Connexion Lumineuse DLC (131) pour permettre l'assignation d'une adresse IP ;
- l'établissement, postérieurement à ladite phase de configuration, d'une communication entre lesdits premier et second éléments du réseau de distribution d'énergie électrique, dans laquelle lesdites première et seconde adresses IP sont échangées dans le but de créer une association entre lesdits premier et second éléments permettant la commande de ladite prise murale 2P+T (121) ou dudit dispositif DCL (131) par ledit interrupteur mural (141) grâce à l'échange de paquets IP, dans lequel la transmission entre ledit interrupteur (141) et ladite prise 2P+T ou ledit dispositif de connexion Lumineuse DCL (131) est effectuée au moyen d'une communication radio-fréquence.

2. Procédé selon la revendication 1 **caractérisé en ce que** ladite assignation d'adresse IP est réalisée au moyen d'un protocole DHCP, BootP ou RARP, utilisant des adresses MAC - Media Access Control - des premier et second éléments constitutifs du réseau, lesdites adresses MAC étant stockées dans lesdits premiers et seconds circuits mémoires, respectivement.

3. Procédé selon la revendication 2 **caractérisé en ce que** ladite assignation d'adresse est réalisé au moyen d'un serveur DHCP localisé au sein d'un disjoncteur.

4. Procédé selon la revendication 2 ou 3 **caractérisé en ce que** le réseau est subdivisé en sous-réseaux LAN et que l'échange des paquets est assuré par au moins un disjoncteur intégrant la fonction de routeur assurant les échanges de paquets entre deux sous-réseaux.

5. Procédé selon la revendication 3 **caractérisé en ce qu'**au moins un disjoncteur (702-704) est configuré en routeur, avec une table de routage stockée dans sa mémoire interne.

6. Procédé selon la revendication 5 **caractérisé en ce que** le ou les disjoncteurs routeurs peuvent détecter une défaillance d'un disjoncteur opérationnel au moyen d'un mécanisme de polling.

7. Interrupteur adapté pour la mise en œuvre du procédé défini dans les revendications 1 à 5, comportant :
- des moyens de connexion au réseau électrique;
- des moyens permettant de stocker une adresse IP attribué par un serveur DHCP;
- des moyens pour générer des paquets IP dans le but d'établir une communication.

8. Prise à encastrer, par exemple dans un support mural, adapté pour la mise en œuvre du procédé défini dans les revendications 1 à 5, comportant :
- un bornier permettant la connexion au réseau électrique ;
- un connecteur permettant le branchement d'une fiche ;
- des moyens permettant de stocker une adresse IP;
- des moyens pour générer des paquets IP dans le but d'établir une communication avec d'autres éléments.

9. Dispositif de connexion lumineuse adapté pour la mise en œuvre du procédé défini dans les revendications 1 à 5, comportant :
- un bornier permettant la connexion au réseau électrique ;
- un connecteur permettant le branchement d'un luminaire ;
- des moyens permettant de stocker une adresse IP ;
- des moyens pour générer des paquets IP dans le but d'établir une communication avec d'autres éléments.

10. Disjoncteur pour tableau électrique destiné à la mise en œuvre du procédé défini dans l'une quelconque des revendications 1 à 5, **caractérisé en ce qu'**il comporte :
- un bornier d'entrée permettant la connexion d'au moins deux conducteurs, par exemple un conducteur PHASE et un conducteur NEUTRE ;
- un bornier de sortie protégé comportant au moins deux conducteurs ;
- des moyens de stockage d'une adresse IP et des moyens de communication permettant l'échange de paquets IP au travers le réseau électrique avec d'autres éléments ou modules dudit réseau.

11. Disjoncteur selon la revendication 10 comportant en outre un serveur DHCP, BootP ou RARP, éventuellement débrayable, permettant d'assigner des adresses IP, notamment aux éléments du réseau de distribution d'énergie électrique.

12. Disjoncteur selon la revendication 11 comportant en outre un routeur doté de moyens de stockage des tables de routage, afin d'assurer le routage des paquets IP généré depuis et acheminé vers les éléments communication appartenant à un sous-réseau LAN.

13. Disjoncteur selon la revendication 12 comportant des moyens pour assurer conjointement toutes les fonctions de routage requises par tous les sous-réseaux LAN composant le réseau électrique.

14. Disjoncteur selon la revendication 13 comportant des fonctions de routage débrayable et un mode d'attente, Stand-by, permettant de se substituer à un disjoncteur opérationnel en cas de dysfonctionnement de ce dernier.

15. Disjoncteur selon l'une quelconque des revendications 10 à 14, **caractérisé en ce qu'**il comporte un circuit électronique amovible permettant le remplacement des éléments électroniques défectueux.

## Patentansprüche

1. Verfahren zur Kommunikation zwischen zwei Elementen, die konstitutiv für ein elektrisches Energieverteilungsnetz einer einphasigen oder dreiphasigen Haushalts-oder Industrieanlage sind, wobei das Verfahren die folgenden Schritte umfasst:
- Zuweisen einer ersten IP-Adresse an ein erstes Bestandteilselement des Verteilungsnetzes, wobei das erste Element ein Wandschalter (141) mit einer ersten elektronischen Schaltung (560) ist, dieerste Speicherschaltungen (563, 564) umfasst, die für die Speicherung der ersten IP-Adresse konfiguriert sind, die während einer Phasenkonfiguration zugewiesen wird;
- Zuweisen einer zweiten IP-Adresse an ein zweites konstitutives Element des elektrischen Energieverteilungsnetzes, bei dem das zweite Element eine 2P+E-Wandsteckdose (121) oder eine Lichtanschlussvorrichtung (LCD - 131) ist, die eine zweite elektronische Schaltung (360, 460) mit zweiten Speicherschaltungen (362, 363, 463, 465) umfasst, die für die Speicherung der zweiten IP-Adresse konfiguriert sind, die während einer Konfigurationsphase zugewiesen wurde;
wobei die Konfiguration die MAC-Adresse des Schalters (141) und die MAC-Adresse der 2P+E-Wandsteckdose (121) oder derLichtanschlussvorrichtung (LCD 131) zur Zuweisung einer IP-Adresse verwendet;
- Aufbau, nach der Konfigurationsphase, einer Kommunikation zwischen dem ersten und dem zweiten Element des Verteilungsnetzes für elektrische Energie, bei der die erste und die zweite IP-Adresse ausgetauscht werden, um eine Zuordnung zwischen dem ersten und dem zweiten Element zu schaffen, die die Steuerung der 2P+E-Wandsteckdose (121) oder der Lichtanschlussvorrichtung (LCD-131) durch den Wandschalter (141) über den Austausch von IP-Paketen ermöglicht, wobei die Kommunikation zwischen dem Schalter (141) und dem 2P+E oder der Lichtanschlussvorrichtung (DCL 131) über eine Funkfrequenzkommunikation erfolgt.

2. Das Verfahren nach Anspruch 1, bei dem die IP-Adresszuweisung mittels eines DHCP-, BootP- oder RARP-Protokolls unter Verwendung von MAC-Adressen - Media Access Control - der ersten und zweiten konstituierenden Elemente des Netzwerks durchgeführt wird, wobei die MAC-Adressen in den ersten bzw. zweiten Speicherschaltungen gespeichert werden.

3. Das Verfahren nach Anspruch 2, bei dem die Adresszuweisung mittels eines DHCP-Servers erfolgt, der sich innerhalb eines Leistungsschalters befindet.

4. DasVerfahren nach Anspruch 2 oder 3, **dadurch gekennzeichnet, dass** das Netz in LAN-Teilnetze unterteilt ist und dass der Austausch der Pakete durch mindestens einen Leitungsschutzschalter gewährleistet wird, der die Funktion eines Routers integriert, der den Austausch von Paketen zwischen zwei Teilnetzen gewährleistet.

5. DasVerfahren nach Anspruch 3, bei dem mindestens ein Leitungsschutzschalter (702-704) als Router konfiguriert ist, in dessen internem Speicher eine Routing-Tabelle gespeichert ist.

6. DasVerfahren nach Anspruch 5, wobei der/die mindestens eine(n) als Router arbeitende(n) Leitungsschutzschalter (702-704) dank eines Polling-Mechanismus einen in einem Leitungsschutzschalter auftretenden Fehler erkennen kann/können.

7. Ein Schalter, der für die Implementierung der in den Ansprüchen 1 bis 5 definierten Methode geeignet ist, bestehend aus:
- Mittel zum Anschluss an das elektrische Netz;
- Mittel zum Speichern einer von einem DHCP-Server zugewiesenen IP-Adresse;
- Mittel zur Erzeugung von IP-Paketen zum Zweck des Aufbaus einer Kommunikation.

8. Eine Wandsteckdose, geeignet zur Durchführung des in den Ansprüchen 1 bis 5 definierten Verfahrens, bestehend aus:
- einem Klemmenblock, der den Anschluss an das elektrische Netzwerk ermöglicht;
- einem Steckverbinder, der den Anschluss eines Netzsteckers ermöglicht;
- Mittel zur Speicherung einer IP-Adresse;
- Mittel zur Erzeugung von IP-Paketen zum Zweck der Herstellung der Kommunikation mit anderen Elementen.

9. Eine Lichtanschlussvorrichtung, die für die Durchführung des in den Ansprüchen 1 bis 5 definierten Verfahrens geeignet ist, bestehend aus:
- einen Klemmenblock, der den Anschluss an das elektrische Netzwerk ermöglicht;
- einen Verbinder, der den Anschluss einer Beleuchtungseinrichtung ermöglicht;
- Mittel zur Speicherung einer IP-Adresse;
- Mittel zur Erzeugung von IP-Paketen zum Zweck der Herstellung der Kommunikation mit anderen Elementen.

10. Leitungsschutzschalter für eine elektrische Schalttafel, der zur Durchführung des in einem der Ansprüche 1 bis 5 definierten Verfahrens bestimmt ist, **dadurch gekennzeichnet, dass** er umfasst:
- eine Eingangsklemmenleiste, die den Anschluss von mindestens zwei Leitern ermöglicht, z.B. einem PHASEN-Leiter und einem NEUTRALEN Leiter;
- einem geschützten Ausgangsklemmenblock mit mindestens zwei Drähten;
- Mittel zur Speicherung einer IP-Adresse und Kommunikationsmittel, die den Austausch von IP-Paketen über das elektrische Netzwerk mit anderen Elementen oder Modulen des genannten Netzwerks ermöglichen.

11. Der Leitungsschutzschalternach Anspruch 10, der außerdem einen DHCP-, BootP- oder RARP-Server umfasst, der wahlweise deaktiviert werden kann und die Zuweisung von IP-Adressen, insbesondere für die Elemente des elektrischen Energieverteilungsnetzes, ermöglicht.

12. Der Leitungsschutzschalter nach Anspruch 11, ferner umfassend einen Router, der mit Mitteln zur Speicherung von Routing-Tabellen versehen ist, um dasRouting der IP-Pakete sicherzustellen, die von den zu einem LAN-Subnetz gehörenden Kommunikationselementen erzeugt und zu diesen geleitet werden.

13. Der Leitungsschutzschalter nach Anspruch 12 enthaltend Mitteln zur gemeinsamen Gewährleistung aller Routing-Funktionen, die von allen LAN-Teilnetzen, aus denen das elektrische Netz besteht, benötigt werden.

14. Der Leitungsschutzschalter nach Anspruch 13, mit deaktivierbaren Leitungsfunktionen und einem Bereitschaftsmodus, Stand-by, der es ermöglicht, einen funktionsfähigen Leitungsschutzschalter im Falle einer Fehlfunktion desselben zu ersetzen.

15. Der Leitungsschutzschalter nach einem der Ansprüche 10 bis 14, **dadurch gekennzeichnet, dass** er eine abnehmbare elektronische Schaltung aufweist, die den Austausch defekter elektronischer Elemente ermöglicht.

## Claims

1. A process of communication between two elements constitutive of an electrical energy distribution network of a single-phase or three-phase domestic or industrial installation, the method comprising the following steps:
- the assignment of a first IP address to a first constituent element of the distribution network, wherein said first element is a wall switch (141) having a first electronic circuit (560) comprising first memory circuits (563, 564) configured for the storage of said first IP address assigned during a phase configuration;
- the assignment of a second IP address to a second constituent element of the electrical energy distribution network, in which said second element is a 2P+E wall socket (121) or a Light Connection Device (LCD - 131) comprising a second electronic circuit (360, 460) comprising second memory circuits (362, 363, 463, 465) configured for the storage of said second IP address assigned during a configuration phase;
Wherein said configuration uses the MAC address of said switch (141) and the MAC address of said 2P+E wall socket (121) or of said Light Connection Device (LCD 131) for assigning an IP address;
- the establishment, after said configuration phase, of a communication between said first and second elements of said electrical energy distribution network, in which said first and second IP addresses are exchanged so as to create an association between said first and second elements allowing the control of said 2P+E wall socket (121) or said Light connection device (LCD - 131) by said wall switch (141) through the exchange of IP packets, wherein the communication between said switch (141) and said 2P+E or said Light connection Device (DCL 131) is performed through a radio-frequency communication.

2. The process according to claim 1, wherein said IP address assignment is carried out by means of a DHCP, BootP or RARP protocol, using MAC addresses - Media Access Control - of the first and second constituent elements of the network, said MAC addresses being stored in said first and second memory circuits, respectively.

3. The process according to Claim 2, wherein said address assignment is carried out by means of a DHCP server located within a circuit breaker.

4. The process according to Claim 2 or 3, **characterized in that** the network is subdivided into LAN subnetworks and that the exchange of the packets is ensured by at least one circuit breaker integrating the function of router ensuring the exchange of packets between two subnetworks.

5. The process according to claim 3, wherein at least one circuit breaker (702-704) is configured as a router, with a routing table being stored into its internal memory.

6. A process according to claim 5 wherein the at least one circuit breaker(s) (702-704) operating as a router can detect a failure occurring into a circuit breaker thanks to a polling mechanism.

7. A switch suitable for implementing the method defined in claims 1 to 5, comprising:
- means for connection to the electrical network;
- means for storing an IP address assigned by a DHCP server;
- means for generating IP packets for the purpose of establishing a communication.

8. A wall mounting socket, suitable for implementing the method defined in claims 1 to 5, comprising:
- a terminal block allowing connection to the electrical network;
- a connector allowing the connection of a power plug;
- means for storing an IP address;
- means for generating IP packets for the purpose of establishing communication with other elements.

9. A light connection device suitable for the implementation of the method defined in claims 1 to 5, comprising:
- a terminal block allowing connection to the electrical network;
- a connector allowing the connection of a lighting device;
- means for storing an IP address;
- means for generating IP packets for the purpose of establishing communication with other elements.

10. A circuit breaker for an electrical panel intended for implementing the method defined in any one of claims 1 to 5, **characterized in that** it comprises:
- an input terminal block allowing the connection of at least two conductors, for example a PHASE conductor and a NEUTRAL conductor;
- a protected output terminal block comprising at least two wires;
- means for storing an IP address and means of communication allowing the exchange of IP packets through the electrical network with other elements or modules of said network.

11. A circuit breaker according to claim 10 further comprising a DHCP, BootP or RARP server, optionally which can be disactivated, making it possible to assign IP addresses, in particular to the elements of the electrical energy distribution network.

12. A circuit breaker according to claim 11, further comprising a router provided with means for storing routing tables, in order to ensure the routing of the IP packets generated from and routed to the communication elements belonging to a LAN subnetwork.

13. A circuit breaker according to claim 12 including means for jointly ensuring all the routing functions required by all the LAN subnetworks making up the electrical network.

14. A circuit breaker according to Claim 13, comprising routing functions which can be disactivated and a stand-by mode, stand-by, making it possible to replace an operational circuit breaker in the event of a malfunction of the latter.

15. A circuit breaker according to any one of Claims 10 to 14, **characterized in that** it comprises a removable electronic circuit allowing the replacement of defective electronic elements.
